# EUROPEAN PATENT APPLICATION

(11) **EP 1 612 518 A2**
(43) Date of publication of application: **04.01.2006**
(21) Application number: 04425467.0
(22) Date of filing: 30.06.2004
(51) Int. Cl.: G01C 22/00, A63B 69/36

(54) **A wireless communication device**

(71) Applicant: MOTOROLA, INC., Schaumburg, IL 60196 (US)
(72) Inventor: Del Vento, Davide, 10147 Torino (IT); Pascucci, Enrico, 10147 Torino (IT); Casini, Alberto, 10147 Torino (IT)
(74) Representative: Iannone, Carlo Luigi

(57) **Abstract**

A wireless communication device (100) comprising: a user interface (104); a controller (102); and a motion sensor (206), wherein said controller (102) is configured to read impulses from said motion sensor (206). Said motion sensor (206) is adapted to generate an impulse in response to step taken by a user carrying the communication device. Said controller (102) counts impulses received from said motion sensor (206) and measures time lapsed between two consecutive impulses. The communication device further comprises a memory (130) for storing average value of a human step. The controller (102) calculates velocity and distance walked by the user carrying the communication device (100) based on said time lapsed between two consecutive impulses and the number of impulses counted as well as the average value of human step.

## Description

### Field of the Invention

The present invention relates to a wireless communication device having a function of vibration detection, in general, and in particular, to a wireless communication device with integrated pedometer.

### Background of the Invention

People are currently very interested in fitness and wellness. Exercise such as walking or jogging is now very popular for the purpose of improving their health. There are many products for exercise enthusiasts, power walkers, or daily joggers that are designed to help them to maximize walk or workout, safeguard diet and protect quality of life. Very popular devices among these are heart rate monitors and pedometers.

There are known in the art mechanical and electronic pedometers which are designed to measure the walking or jogging distance covered by a user. Pedometers known in the art consist basically of two main modules: a motion sensor which detects body motion at each step and a second component is responsible for processing signals from the motion sensor and presenting results of said processing to the user in a form of covered distance and velocity. The pedometers known in the art are typically worn by the user on a wrist or on a belt on the waist or on a leg.

Despite user's healthy attitude, even during sport exercises he or she often wants to have a mobile phone to be in touch with family, company, business partners. And this causes a problem of overloading the user with devices, which are useful, but which may be inconvenient if all would be worn during jogging or walking.

### Summary of the Invention

A need therefore exists for an apparatus, wherein the above mentioned disadvantages may be alleviated.

According to a first aspect of the present invention there is provided a wireless communication device as claimed in claim 1.

Further features of the present invention are defined in the dependent Claims.

The present invention beneficially allows for implementation of pedometer function into a wireless communication device and limiting in this way the number of devices worn by the runner or walker. In addition adding the pedometer function to the communication device allows for transmitting values calculated by the pedometer function to other communication devices. This function can be very useful for coaching runners or walkers as well as for monitoring exercises performed by people using running/walking as a method of recovery after illness or operation.

### Brief description of the drawings

The present invention will be understood and appreciated more fully from the following detailed description taken in conjunction with the drawings in which:
FIG. 1 is a diagram illustrating a wireless communication device in a first embodiment of the present invention,
FIG. 2 is a diagram illustrating a wireless communication device in a second embodiment of the present invention,
FIG. 3 is a diagram illustrating a wireless communication device in a third embodiment of the present invention,
FIG. 4 is a diagram illustrating a wireless communication device in a fourth embodiment of the present invention,
FIG. 5 is a diagram illustrating a wireless communication device in a fifth embodiment of the present invention,
FIG. 6 is a diagram illustrating oscilloscope image of electric signal measured on motion sensor in one embodiment of the present invention.

### Description of an embodiment of the invention

The multifunction transducer (MFT) described in this document is a device that incorporates a loudspeaker and a linear vibrator into one package. It is a dynamic device based on a loudspeaker but unlike a normal loudspeaker, the magnet structure is not mechanically "grounded". Instead it has its own suspension system tuned to a low frequency (around 150Hz). The device has only one voice coil. At low frequencies, in the region of the magnet suspension resonance, the device behaves like a vibrator with the magnet system moving. The acoustic diaphragm resonance is several octaves higher and thus there is little acoustic output from the device. Above the magnet resonance the magnet structure behaves as if it was grounded and the whole system behaves like a traditional loudspeaker. If the magnet system is moving, then an electrical signal is generated in the coil and the signal can be detected at the terminal pads.

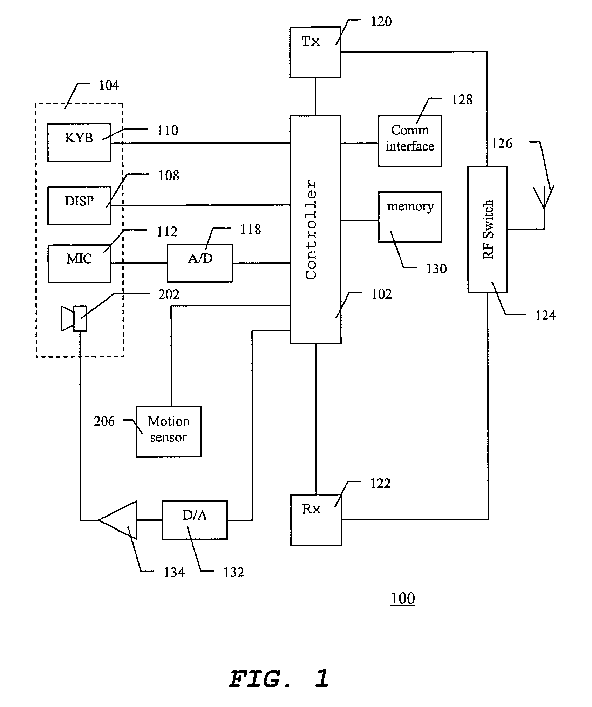

For the sake of clarity the embodiments of the invention are illustrated on FIG. 1 to FIG. 5 in a simplified way, but they provide enough information for the person skilled in the art to practice the invention.

With reference to FIG. 1 a wireless communication device 100 in one embodiment of the present invention is shown. The wireless communication device 100 comprises a user interface 104, a controller 102 and a motion sensor 206. The motion sensor 206 is coupled to the controller 102, which reads electric impulses from said motion sensor 206. As is shown on FIG.1, the wireless communication device 100 has a memory 130, a receiver section 122, a transmitter section 120, a radio frequency (RF) switch 124, an antenna 126, a display 108 (e.g. a colour liquid crystal display), a keyboard 110, a microphone 112 and a second analog-to-digital converter 118, amplifier 134, a loudspeaker 202, a digital-to-analog converter 132. The loudspeaker 202, display 108, keyboard 110 and microphone 112 form the user interface 104. As a controller 102 a microprocessor is used.

In one embodiment, as shown on FIG. 1, the motion sensor 206 is connected directly to the controller 102. In this case the motion sensor 206 mechanically closes the electric circuit in response to beat caused for example by step taken by the user carrying the communication device 100. As the motion sensor one of the known inertial sensors is used.

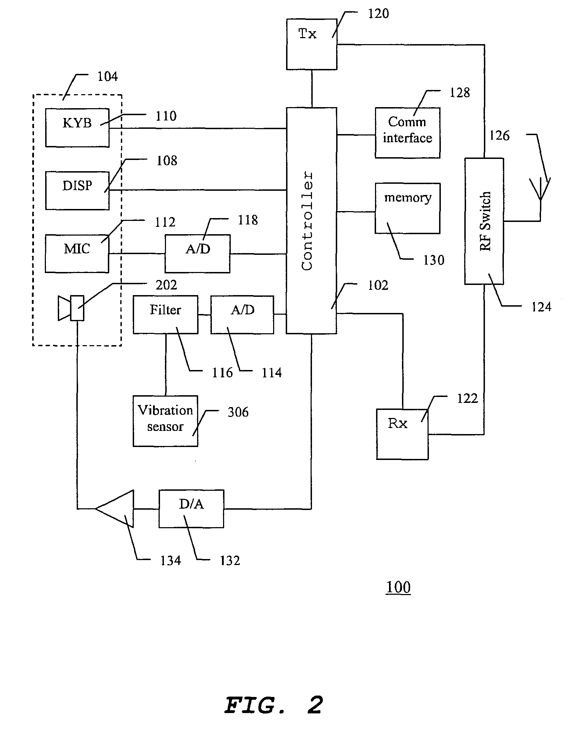

With reference to FIG. 2 an alternative embodiment of the invention is shown. In this embodiment a vibration sensor 306 is used instead of the motion sensor 206. Signals from the vibration sensor 306 are transmitted to the controller 102 via a first analog-to-digital converter 114 and a filter 116. Filtering the impulses is necessary as the vibration sensor 306 is responsive to a wide range of frequencies and to avoid false readings it is necessary to filter out signals that are not caused by steps taken by the user carrying the communication device 100.

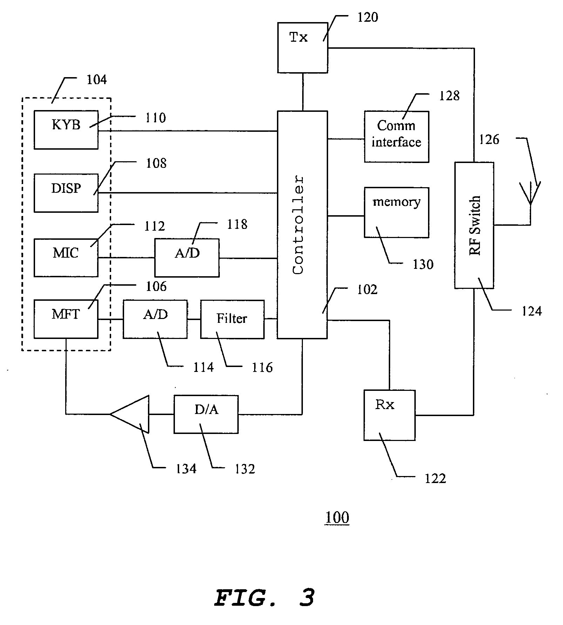

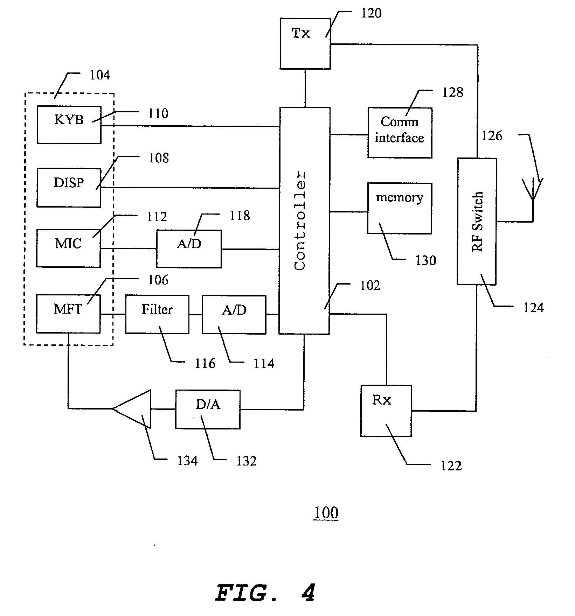

With reference to FIG. 3 and FIG. 4 yet other embodiments of the invention are shown. In these embodiments a Multi Functional Transducer 106 is used instead of the loudspeaker 202. The MTF 106 combines function of the loudspeaker 202 when it reacts in response to audio signals received from the controller 102 as well as function of vibration sensor, when in response to vibrations it generates signals transmitted to the controller 102.

Unless otherwise stated the following description will be focused on an embodiment of the invention in which a Multi Functional Transducer (MFT) 106 is used in said user interface 104 as a loudspeaker and for generating ringtones or vibration alerts and also carries out the function of a vibration sensor. Embodiments of the invention shown on FIG. 3 and FIG. 4 incorporate MTF carrying function of a loudspeaker and a vibration sensor. A great advantage of this solution is that it can be easily implemented in mobile communication devices having the MFT as no additional hardware element is needed for implementation.

However, it will be appreciated that the invention is not limited to this embodiment but may also be realised in practice with other types of vibration or motion sensors (e.g. accelerometers, gyroscopes).

In one embodiment said filter 116 is a bandpass filter as this allow for further reduction of risk of false reading of impulses from the MFT 106 by cutting off frequencies above and below the passband and only signals of a frequency that we expect to detect vibrations caused by the steps taken by the user are allowed to go through. In one embodiment the center frequency of the passband is set approximately at a level of 150Hz.

If the filter 116 is placed between the first analog-to-digital converter 114 and the controller 102 a digital filter is used. FIG. 3 shows embodiments with implemented digital filter.

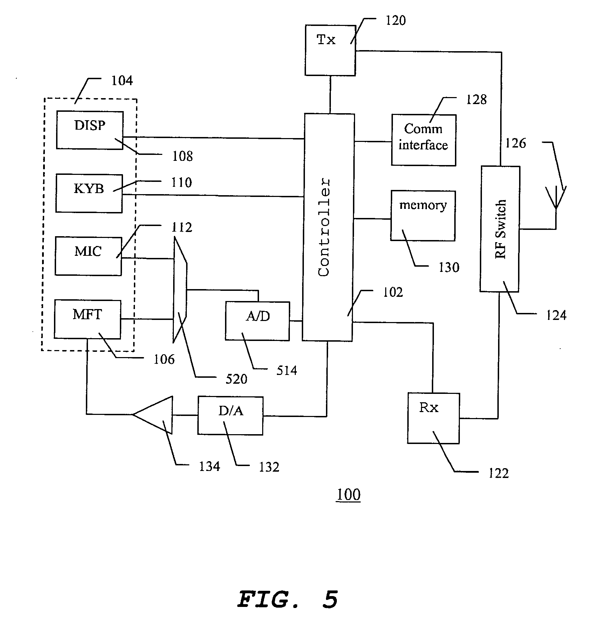

In one embodiment, as shown in FIG. 5, the digital filter is implemented inside the controller 102 using a DSP (Digital signal Processor) digital filtering, e.g. IIR (Infinite Impulse Response) biquadratic filter that can be programmed for audio shaping. It allows for easy implementation of a band pass filter to detect the input from the MFT.

If the filter 116 is placed between said MFT 106 and the first analog-to-digital converter 114 an analog filter is used. FIG. 2 and FIG. 4 show embodiments with implemented digital filters.

The first analog-to-digital converter 114 is configured to convert the impulses generated by said MFT 106 into logical information.

In one embodiment (as shown in FIG. 5) the MFT 106 and the microphone 112 use the same analog-to-digital converter 514. In this embodiment the microphone 112 and MFT 106 (or other vibration sensor) are connected to said analog-to-digital 514 converter via a multiplexer 520.

The wireless communication device 100 further comprises a memory 130, which is configured to store a value of an average length of human step.

In one embodiment the memory 130 stores values of an average human step in a form of a table wherein the values stored correspond to a length of step depending on age, gender or height of the human person and are grouped for walk and run.

In operation said controller 102 counts impulses received from said MFT 106 and measures time lapsed between two consecutive impulses. Having these two quantities measured, the controller 102 using the average value of step taken from the memory 130 calculates velocity of the walk or run of the user carrying the communication device 100 and a distance walked.

In one embodiment the controller 102 allows the user to configure the pedometer function by selecting, using buttons on a keyboard, the correct value of step length based on the user's gender, height and age as well as to select a type of exercise (run or walk). Also, using buttons on a keyboard 110 of the user interface 104 the pedometer function is activated before exercise and deactivated after the exercise is completed. This activation and deactivation initiates and terminates reading and processing said impulses received from said MFT.

In yet another embodiment, to allow personalization of the pedometer function the wireless communication device 100 is configured to manually enter into said memory a value of length of step of the user of the communication device 100.

To help the user to keep track of performed exercises that can be later statistically elaborated, in one embodiment the controller 102 stores in the memory 130 the values of velocity, distance, duration of the exercise, number of steps, date and time of start and termination of the exercise. The data stored in the memory 130 may be transferred via a communication interface 128 to an external device (e.g. a computer). The communication interface may be either a Bluetooth or infra-red, or USB, or other.

Alternatively the wireless communication device 100 may transmit via a radio link of a communication network the values stored in said memory 130 to a second communication device.

In yet another embodiment the communication device 100 may transmit in real time via the radio link, to the second communication device, the calculated values of velocity and/or walked distance. This function may be useful in a process of coaching runners and walkers.

The wireless communication device 100 comprises a display to present to the user the calculated velocity and walked distance or other of the parameters mentioned before.

To improve reliability of step detection and in consequence have more accurate calculated values of velocity and walked or run distance in one embodiment the bandpass filter 116 has tunable center frequency. This allows for adjusting the filter 116 exactly to the resonance frequency of the vibration detected by the MFT 106 caused by a step as the value of the resonance frequency may vary depending on shoes worn by the user, individual style of walk or run.

In one embodiment the controller 102 and the user interface 104 allow the user to choose one of several exercise profiles (e.g. run, walk, cross-country, etc.) that are predefined in said memory 130. Said profiles use different step length for said calculations and stores results of said calculations in appropriate groups of records.

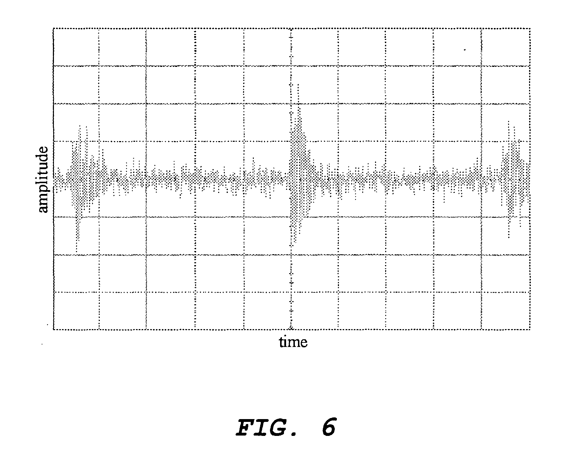

FIG. 6 shows oscilloscope screen image showing the electrical signal measured at the MTF 106. The signal available at the MFT 106 when a step takes place is a damped sinusoidal oscillation.

To further improve reliability of step detection the wireless communication 100 may comprise a second MFT connected to the controller 102. Readings from the second MFT are used for verifying readings from the MFT 106 and reducing risk of false step detection. With two MFTs it is also possible to improve the immunity to orientation of the phone and to detect the vibration for different position of the phone (in the pocket, at the belt, horizontal, vertical...). This is because the MFTs can be placed in such a way as to detect force components along two axis.

In yet another embodiment the controller 102 carries out a spectral analysis of impulses received from the MFT 106. As the steps taken during run and walk are different (e.g. steps taken during run are more powerful than steps taken during walk) impulses read on the MFT 106 are also different. In consequence the controller 102 after analysis of the impulses makes a distinction between walk and run of the user carrying the communication device 100 and in response to result of said analysis applies length of step that corresponds to walk or run in the calculations of the velocity and distance. As the analysis is performed in real time the results of calculations presented to the user or stored in the memory 130 reflect the current type of exercise, which can change several times during one exercise session.

It is within contemplation of the present invention that the Multi Functional Transducer used in the described above embodiment may be replaced by other types of motion sensors without necessity of extensive research or experimentation.

## Claims

**1.** A wireless communication device (100) comprising:
a controller (102); and
a motion sensor (306),
wherein said motion sensor (206) is adapted to generate an impulse in response to step taken by a user carrying the communication device (100) and said controller (102) is adapted to read impulses from said motion sensor (306).

**2.** The wireless communication device (100) according to claim 1 further comprising a first analog-to-digital converter (114) configured to convert said impulses into logical information.

**3.** The wireless communication device (100) according to claim 1, wherein said motion sensor (206) is a vibration sensor.

**4.** The wireless communication device (100) according to claim 3, wherein said vibration sensor is a Multi Functional Transducer /MFT/ (106) used in a user interface (104) for generating ringtones or for vibration alerts.

**5.** The wireless communication device (100) according to any one of preceding claims, further comprising a filter (116) for filtering impulses from said motion sensor.

**6.** The wireless communication device (100) according to claim 5, wherein said filter (116) is a bandpass filter.

**7.** The wireless communication device according to claim 6, wherein said bandpass filter (116) has a center frequency set approximately at a level of 150Hz.

**8.** The wireless communication device (100) according to any one of preceding claims, wherein said controller (102) is adapted to count impulses received from said motion sensor.

**9.** The wireless communication device (100) according to any one of preceding claims, wherein said controller (102) is adapted to measure time lapsed between two consecutive impulses.

**10.** The wireless communication device (100) according to claim 1 further comprising a memory (130) configured to store a value of an average length of human step.

**11.** The wireless communication device (100) according to claim 10, wherein said memory (130) is adapted to store in a form of a table values of average length of human step depending on age, gender, height, walk and run and said controller and said user interface are configured to allow a user of said communication device (100) to select the value from the memory (130) that corresponds to the user's age, gender, height, walk or run.

**12.** The wireless communication device (100) according to claim 10, wherein said controller (102) is configured to calculate velocity of walk of the user carrying the communication device (100) based on said time lapsed between two consecutive impulses and the average value of human step.

**13.** The wireless communication device (100) according to claim 10, wherein said controller (102) is configured to calculate distance walked by the user carrying the communication device (100) based on the number of impulses counted by the controller and the average value of human step.

**14.** The wireless communication device (100) according to any one of preceding claims, wherein said controller (102) is configured to initiate and terminate reading and processing said impulses in response to switching-on and switching-off a pedometer function using the user interface (104).

**15.** The wireless communication device (100) according to claim 12 or claim 13, wherein said controller (102) is configured to store in said memory (130) the values of velocity or distance, or duration of the walk, or number of steps, or date and time of start and termination of the walk, or any combination thereof.

**16.** The wireless communication device (100) according to claim 15 configured to transfer via a communication interface (128) said values stored in said memory (130) to an external device.

**17.** The wireless communication device (100) according to any one of claim 6 to claim 16, wherein said bandpass filter (116) has tunable center frequency.

**18.** The wireless communication device (100) according to claim 12 or claim 13 wherein said controller (102) is adapted to carry out a spectral analysis of impulses and to make a distinction between walk and run of the user carrying the communication device (100) and in response to result of said analysis to apply corresponding length of step for walk or run in said calculation.

**19.** The wireless communication device (100) according to any one of preceding claims comprising a second motion sensor connected to said controller for verifying readings from said motion sensor and reducing risk of false step detection.

**20.** The wireless communication device according to claim 19, wherein said second motion sensor is a Multi Functional Transducer /MFT/.

**21.** The wireless communication device (100) according claim 12 or claim 13 adapted to transmit in real time, via a radio link, the calculated values of velocity and/or walked distance to a second communication device.

**22.** The wireless communication device (100) according to claim 15 adapted to transmit via a radio link the values stored in said memory to a second communication device.

**24.** The wireless communication device (100) according to claim 10 or claim 11 configured to manually enter into said memory (130) a value of length of step of the user of the communication device (100).

**25.** A method of operating a wireless communication device to determine velocity and/or distance walked or run by a user carrying the wireless communication device, the method comprising the steps of:
generating, by a motion sensor (206), an impulse in response to step taken by the user carrying the communication device (100) and
reading, by a controller (102), impulses from said motion sensor (306);
counting, by the controller (102), said impulses received from the motion sensor;
measuring, by the controller (102), time lapsed between two consecutive impulses;
calculating, by the controller (102), velocity and/or distance of walk or run of the user carrying the communication device (100) based on said time lapsed between two consecutive impulses, number of impulses counted by the controller and the average value of human step stored in a memory (130).

**26.** The method according to claim 25 further comprising the step of storing in said memory (130) the values of velocity or distance, or duration of the walk, or number of steps, or date and time of start and termination of the walk, or any combination thereof.

**27.** The method according to claim 26 further comprising the step of transferring via a communication interface (128) said values stored in said memory (130) to an external device.

**28.** The method according to claim 25 further comprising the steps of:
carrying out, by the controller (102), a spectral analysis of impulses and to make a distinction between walk and run of the user carrying the communication device (100); and
applying, in response to result of said analysis, corresponding length of step for walk or run in said calculation, wherein the length is taken from the memory (130).
